# EUROPEAN PATENT APPLICATION

(11) **EP 4 567 068 A1**
(43) Date of publication of application: **11.06.2025**
(21) Application number: 23849707.7
(22) Date of filing: 21.04.2023
(51) Int. Cl.: C08L 23/18, C08K 3/22, C08K 5/09, C08K 5/20, C08K 5/541, C08L 23/16, C09K 3/10, F16J 15/10

(54) **FLAME-RETARDANT RUBBER COMPOSITION AND GASKET**

(30) Priority: 05.08.2022 JP 2022125916
(71) Applicant: NOK Corporation, Minato-ku, Tokyo 105-8585 (JP)
(72) Inventor: AIBA, Takafumi, Fujisawa-shi, Kanagawa 251-0042 (JP)
(74) Representative: Global IP Europe Patentanwaltskanzlei
(86) International application number: PCT/JP2023/016022
(87) International publication number: WO 2024/029144

(57) **Abstract**

Provided is a flame-retardant rubber composition including an ethylene-α-olefin-non-conjugated diene copolymer, aluminum hydroxide, an alkyl-modified silane coupling agent, and a hydrocarbon-based plasticizer. An amount of the aluminum hydroxide is 60 mass % or more of the flame-retardant rubber composition, a total amount of the alkyl-modified silane coupling agent and the hydrocarbon-based plasticizer is 8 mass % or less of the flame-retardant rubber composition, and an amount of the alkyl-modified silane coupling agent is 5 mass % or more of the aluminum hydroxide. The flame-retardant rubber composition has excellent flame retardancy, physical properties suitable as a sealing material, and low environmental impact.

## Description

### TECHNICAL FIELD

The present invention relates to a flame-retardant ethylene-α-olefin-non-conjugated diene copolymer rubber composition and a gasket.

### BACKGROUND ART

An ethylene-α-olefin-non-conjugated diene copolymer, represented by ethylene-propylene-diene monomer (EPDM) rubber, has excellent mechanical properties, heat resistance, and weather resistance, and is also inexpensive, so that it is used for rubber parts such as gaskets for sealing in a wide range of products such as automobile parts, electrical product parts, and civil engineering and construction materials.

In recent years, along with the increasing sophistication of performance requirements for automobiles and electrical products, high performance in terms of low-temperature properties, safety, and flame retardancy is required for gaskets used in these products, particularly in electric vehicles (EVs), hybrid vehicles (Hybrid Energy Vehicles; HEVs), or lithium-ion batteries. Many techniques for imparting flame retardancy to ethylene-α-olefin-non-conjugated diene copolymer rubber by adding halogen-based compounds/antimony compounds, ammonium polyphosphate, hydrated metal oxides, expandable graphite, etc. have been reported. In particular, it is known that high flame retardancy can be imparted even with a small amount of the composition by using one or two or more of halogen-based compounds such as chlorinated polyethylene, chlorinated paraffin, and decabromodiphenyl ether as well as further antimony trioxide in combination (for example, Patent Literature 1). However, halogen-based compounds generate halogen gases having toxicity and corrosiveness when burned, and antimony trioxide is a hazardous substance, so that there is a risk that they will cause environmental pollution.

Therefore, flame-retardant EPDMs to which non-halogen and non-antimony flame retardants such as ammonium polyphosphate, hydrated metal oxides such as aluminum hydroxide and magnesium hydroxide have been added are disclosed. However, many of them are foams used for indoor products such as home appliances and outdoor products such as automobiles and buildings such as houses, as sealing materials for airtightness, waterproofing, etc., insulating materials, soundproofing materials, etc. (for example, Patent Literatures 2 and 3). On the other hand, non-foamed EPDMs are disclosed (for example, Patent Literatures 4, 5, and 6).

### CITATION LIST

### Patent Literature

Patent Literature 1: JP H5-314841 A
Patent Literature 2: JP 2002-293976 A
Patent Literature 3: JP 2007-204621 A
Patent Literature 4: JP 2013-194232 A
Patent Literature 5: JP 2018-16747 A
Patent Literature 6: International Publication No. WO2021/153234

### SUMMARY OF INVENTION

### Technical Problem

Since hydrated metal oxides are hydrophilic, they have a strong interaction with metals, and therefore, an ethylene-α-olefin-non-conjugated diene copolymer rubber to which a large amount of hydrated metal oxide is added strongly adheres to manufacturing equipment such as molds and kneaders, resulting in reduced processability. In addition, since hydrated metal oxides also function as fillers, when added in large amounts, the hardness increases and becomes unsuitable for sealing materials. For example, in the flame-retardant EPDM disclosed in Patent Literature 4, the amount of aluminum hydroxide is limited to 70% or less of the mass ratio of EPDM, and the flame retardancy is insufficient with only non-halogen-based flame retardants such as aluminum hydroxide or further ammonium polyphosphate, so that halogen-based flame retardants are used in combination. Alternatively, in order to reduce adhesion to molds, etc., processing aids such as waxes and soaps are generally used, but as the amount of hydrated metal oxide increases, a larger amount of processing aid is required, resulting in a reduction in the amount of flame retardant and a decrease in flame retardancy.

The flame-retardant EPDM disclosed in Patent Literature 5, to which a metal hydroxide is added, is a composition constituting the gangway connection of a railway vehicle, and an acid-modified polyolefin is added to reduce the amount of metal hydroxide in order to suppress the decrease in durability caused by the metal hydroxide, but it is presumed that the hardness of the molded product is high and unsuitable for sealing materials. The addition of a plasticizer can be mentioned as a means for suppressing the hardness of the molded product, but the plasticizer is flammable, so that the flame retardancy is reduced.

In the flame-retardant rubber composition disclosed in Patent Literature 6, by adding a vinyl-modified silane coupling agent such as vinyltrimethoxysilane to an ethylene-α-olefin-non-conjugated diene copolymer together with a hydrated metal oxide, the surface of the hydrated metal oxide is silane-treated to improve compatibility, making it easier to uniformly disperse while suppressing the amount of the composition, and flame retardancy can be improved. In addition, compression set can be improved. Furthermore, by applying an ethylene-butene-diene monomer (EBDM) rubber using butene as the α-olefin, a flame-retardant rubber composition excellent in low-temperature properties is provided. However, the vinyl-modified silane coupling agent reacts with the ethylene-α-olefin-non-conjugated diene copolymer to increase the hardness of the flame-retardant rubber composition. Therefore, in order to obtain a hardness suitable for sealing materials, it is necessary to formulate a large amount of plasticizer, and as the proportion of hydrated metal oxide decreases and a large amount of plasticizer is used, the flame retardancy decreases, making it difficult to achieve both a more appropriate hardness and high flame retardancy.

The present invention has been made in view of the above problems, and an object thereof is to provide an ethylene-α-olefin-non-conjugated diene copolymer composition and a gasket that have excellent flame retardancy, low environmental impact, good releasability, and physical properties suitable for sealing materials.

### Solution to Problem

The present inventors have made diligent studies on the necessary additives and their content along with aluminum hydroxide as a flame retardant in order to solve the above problems. As a result, they have found that by adding an alkyl-modified silane coupling agent in a predetermined ratio or more with respect to aluminum hydroxide, adhesion to molds, etc. can be reduced and the increase in hardness can be suppressed, and by including the silane coupling agent or further a plasticizer at a predetermined content, an appropriate hardness can be achieved without impairing flame retardancy. The present invention has been completed based on such findings.

That is, the flame-retardant rubber composition of the present embodiment contains an ethylene-α-olefin-non-conjugated diene copolymer, aluminum hydroxide, and an alkyl-modified silane coupling agent. An amount of the aluminum hydroxide is 60 mass % or more of the flame-retardant rubber composition, an amount of the alkyl-modified silane coupling agent is 8 mass % or less of the flame-retardant rubber composition, and an amount of the alkyl-modified silane coupling agent is 5 mass % or more of the aluminum hydroxide.

In addition, the gasket of the present embodiment is made of the aforementioned flame-retardant rubber composition.

### Advantageous Effects of Invention

The flame-retardant rubber composition of the present embodiment has excellent flame retardancy, low environmental impact, good releasability, and physical properties suitable for sealing materials. The gasket of the present embodiment has excellent flame retardancy, low environmental impact, and physical properties suitable as a sealing material.

### DESCRIPTION OF EMBODIMENTS

Hereinafter, the embodiments of the present invention will be described in detail. However, the scope of the present invention is not limited to the embodiments described below as concrete examples.

### [Flame-retardant Rubber Composition]

The flame-retardant rubber composition of the present embodiment contains an ethylene-α-olefin-non-conjugated diene copolymer, a crosslinking agent, aluminum hydroxide as a flame retardant, an alkyl-modified silane coupling agent, a hydrocarbon-based plasticizer, a crosslinking aid, and a processing aid. By applying aluminum hydroxide as a flame retardant, the environmental impact of the flame-retardant rubber composition can be reduced, and also, among non-halogen and non-antimony flame retardants, flame retardancy can be imparted with a relatively small amount, so that the amount of plasticizer, etc. for reducing the hardness can be small. The alkyl-modified silane coupling agent hydrophobizes the aluminum hydroxide to weaken the adhesion of the flame-retardant rubber composition containing a large amount of aluminum hydroxide to molds, etc., ensuring releasability, and also reduces the hardness, making the plasticizer unnecessary or reducing its addition amount. Then, by formulating the processing aid and plasticizer in appropriate amounts, rubber properties suitable for sealing materials can be obtained without impairing the flame retardancy imparted by the flame retardant. Hereinafter, each component constituting the flame-retardant rubber composition will be described.

### (Ethylene-α-olefin-non-conjugated Diene Copolymer)

The ethylene-α-olefin-non-conjugated diene copolymer is a rubber in which a small amount of a non-conjugated diene component is copolymerized with ethylene and an α-olefin. The α-olefin is an α-olefin having 3 or more carbon atoms, and preferably an α-olefin having 4 or more carbon atoms. By using an α-olefin having 3 or more carbon atoms, crystallization of polyethylene can be suppressed. Examples of α-olefins having 3 or more carbon atoms include propylene, 1-butene, 1-pentene, 1-hexene, 4-methyl-1-pentene, 1-octene, 1-decene, etc., and propylene and 1-butene are preferred. As the non-conjugated diene, 5-ethylidene-2-norbornene, dicyclopentadiene, 1,4-hexadiene, etc. are preferred.

### (Crosslinking Agent)

The crosslinking agent can be applied from those generally usable for crosslinking ethylene-α-olefin-non-conjugated diene copolymers, and organic peroxides are preferred, for example. This is because organic peroxides do not contain sulfur-based compounds and do not corrode metal materials in contact with the flame-retardant rubber composition. Specifically, organic peroxides include t-butyl peroxide, dicumyl peroxide, t-butylcumyl peroxide, 1,1-di(t-butylperoxy)-3,3,5-trimethylcyclohexane, 2,5-dimethyl-2,5-di(t-butylperoxy)hexane, etc. The formulation of the organic peroxide is preferably 3 to 6 parts by mass per 100 parts by mass of the ethylene-α-olefin-non-conjugated diene copolymer.

### (Aluminum Hydroxide)

Aluminum hydroxide has a higher endothermic rate during thermal decomposition than other hydrated metal oxides such as magnesium hydroxide, so that flame retardancy can be exhibited even with a relatively small amount. Therefore, by selecting aluminum hydroxide as the flame retardant, its formulation can be reduced, suppressing the effect on rubber properties such as hardness of the ethylene-α-olefin-non-conjugated diene copolymer. The flame-retardant rubber composition is formulated so as to contain 60 mass % or more of aluminum hydroxide in order to obtain high flame retardancy, specifically to meet the V-0 grade in the UL94 standard. The upper limit of the formulation of aluminum hydroxide is set to a value at which the content of the alkyl-modified silane coupling agent, which is formulated in proportion to the aluminum hydroxide as described later, does not exceed the specified upper limit value.

Aluminum hydroxide is preferably in the form of particles. In order to improve the dispersibility and workability during kneading, the aluminum hydroxide preferably has an average particle diameter of 0.6 µm or more, and more preferably 0.9 µm or more. On the other hand, in order to make it difficult to affect the mechanical properties of the flame-retardant rubber composition, the aluminum hydroxide preferably has an average particle diameter of 10 µm or less, and more preferably 5.0 µm or less. In addition, aluminum hydroxide whose surface has been silane-treated can also be applied.

### (Alkyl-modified Silane Coupling Agent)

The silane coupling agent silane-treats the surface of aluminum hydroxide for hydrophobization. By hydrophobizing aluminum hydroxide, the flame-retardant rubber composition can be made to have weak adhesiveness to molds, etc., so as not to reduce releasability, and also, the compatibility of aluminum hydroxide with the ethylene-α-olefin-non-conjugated diene copolymer can be improved so as to be easily and uniformly dispersed in the flame-retardant rubber composition, thereby increasing the flame retardancy with respect to the formulation amount. In addition, the Payne effect of aluminum hydroxide as a filler is reduced, suppressing the increase in hardness due to the addition of aluminum hydroxide. Furthermore, the alkyl-modified silane coupling agent has no functional groups other than silanol groups that react with aluminum hydroxide, which is the surface treatment target. Therefore, it does not form covalent bonds with EPDM, etc., and does not increase the hardness of the flame-retardant rubber composition, but further reduces the hardness conversely. Moreover, even if unreacted silane coupling agent is present, the silanol groups bond to molds, etc., but since there are no functional groups that bond to the polymer, they do not reduce the releasability.

The alkyl-modified silane coupling agent preferably has an alkyl group having 8 to 20 carbon atoms, and examples include octyltriethoxysilane, hexadecyltrimethoxysilane, etc. In order for the flame-retardant rubber composition to have sufficient releasability, the alkyl-modified silane coupling agent is formulated at 5 mass % or more of the aluminum hydroxide. Furthermore, the flame-retardant rubber composition can be formulated with the alkyl-modified silane coupling agent according to the desired hardness, and when the hydrocarbon-based plasticizer described later is not included, it is preferably included at 6 mass % or more. On the other hand, since the alkyl-modified silane coupling agent is flammable, if it is formulated excessively, the flame retardancy decreases, so that the flame-retardant rubber composition is formulated so that the alkyl-modified silane coupling agent is included at 8 mass % or less, and furthermore, when the hydrocarbon-based plasticizer described later is included, the total content of these is set to be 8 mass % or less.

The flame-retardant rubber composition of the present embodiment can incorporate known additives for ethylene-α-olefin-non-conjugated diene copolymer rubbers as needed. For example, by adding a divalent metal oxide such as zinc oxide as a crosslinking aid, a hydrocarbon-based plasticizer, a processing aid, a colorant, an antioxidant, etc., the kneading properties, processability, handling properties, etc. can be improved.

### (Hydrocarbon-based Plasticizer)

The hydrocarbon-based plasticizer has good compatibility with the ethylene-α-olefin-non-conjugated diene copolymer and is one of the general additives for ethylene-α-olefin-non-conjugated diene copolymer rubbers, for example, a mineral oil such as a paraffinic process oil or a naphthenic process oil. In the flame-retardant rubber composition of the present invention, the hydrocarbon-based plasticizer is a plasticizer for reducing the high hardness due to the large amount of aluminum hydroxide added. For this purpose, a total amount of the alkyl-modified silane coupling agent and the hydrocarbon-based plasticizer is 6 mass % or more of the flame-retardant rubber composition. On the other hand, since the hydrocarbon-based plasticizer is easily combustible, the more it is formulated, the more the flame retardancy decreases, so that the flame-retardant rubber composition is formulated so that the total content of the alkyl-modified silane coupling agent and the hydrocarbon-based plasticizer is 8 mass % or less of the flame-retardant rubber composition.

### (Processing Aid)

Examples of the processing aid include stearic acid, fatty acid amide-based compounds, fluorine-containing compounds, ethylene-α-olefin copolymers, etc. Stearic acid, fatty acid amide-based compounds, and fluorine-containing compounds are lubricants and impart flowability and releasability to the flame-retardant rubber composition. When adding stearic acid, fatty acid amide-based compounds, and fluorine-containing compounds, 2 parts by mass or more each per 100 parts by mass of the ethylene-α-olefin-non-conjugated diene copolymer is preferred in order to sufficiently exhibit their effects. On the other hand, stearic acid, fatty acid amide-based compounds, and fluorine-containing compounds are flammable, and if formulated excessively, the flame retardancy decreases, so that the total content of these in the flame-retardant rubber composition is set to be 3 mass % or less, and it is preferable that each is 3 parts by mass or less and the total is 8 parts by mass or less per 100 parts by mass of the ethylene-α-olefin-non-conjugated diene copolymer.

The ethylene-α-olefin copolymer reduces the hardness of the flame-retardant rubber composition containing the ethylene-α-olefin-non-conjugated diene copolymer. The α-olefin preferably has 2 to 10 carbon atoms. When adding the ethylene-α-olefin copolymer, 3 to 6 parts by mass per 100 parts by mass of the ethylene-α-olefin-non-conjugated diene copolymer is preferred.

### (Properties of Flame-retardant Rubber Composition)

The flame-retardant rubber composition of the present embodiment preferably has a JIS-A hardness Hs of 80 or less, and more preferably 75 or less, in order to achieve high sealing properties when manufactured into gaskets, etc. In addition, in order to have sufficient strength as gaskets, etc., the hardness Hs is preferably 60 or more, and more preferably 65 or more. The JIS-A hardness is measured in accordance with JIS K6253 using a durometer (type A).

The flame-retardant rubber composition of the present embodiment preferably achieves the V-0 grade according to the UL94 standard for flame retardancy. By having such flame retardancy, the flame-retardant rubber composition can be applied to sealing materials such as gaskets, particularly gaskets used in high-temperature environments such as EVs and HEVs.

### [Gasket]

The flame-retardant rubber composition of the present embodiment can be molded and processed into sealing materials such as gaskets and O-rings. In particular, it can be applied to gaskets used in EVs and HEVs, and gaskets for sealing the outside of the case of a lithium-ion battery.

### Examples

The flame-retardant rubber composition of the present invention has been described above with respect to the embodiments for carrying out the invention, but hereinafter, examples in which the effects of the present invention have been confirmed will be described. However, the present invention is not limited to these examples.

### (Preparation of Test Pieces)

The formulations of the rubber compositions of each example and each comparative example are shown in Table 1. In Table 1, numerical values outside the range of the present invention are underlined. The raw materials used in the examples and comparative examples are as follows.
(1) Ethylene-α-olefin-non-conjugated diene copolymer
   (1-a) EPDM (ethylene-propylene-ethylidene norbornene copolymer); EP33, manufactured by JSR Corporation
   (1-b) EBDM (ethylene-butene-diene monomer); EBT K-9330M, manufactured by Mitsui Chemicals, Inc.
(2) Crosslinking agent
   Dicumyl peroxide (DCP), Percumyl (registered trademark) D, manufactured by NOF Corporation
(3) Processing aid
   (3-a) Stearic acid; DTST, manufactured by Miyoshi Oil & Fat Co., Ltd.
   (3-b) Oleic acid amide; Diamid O-200, manufactured by Nippon Kasei Chemical Co., Ltd.
   (3-c) Fluorine-containing compound (functionalized perfluoropolyether); Tecnoflon (registered trademark) FPA1, manufactured by SOLVAY
   (3-d) Ethylene-α-olefin copolymer (ethylene-octene copolymer); Engage (registered trademark) XLT 8677, manufactured by Dow Chemical Company
(4) Crosslinking aid
   Zinc oxide, manufactured by Sakai Chemical Industry Co., Ltd.
(5) Flame retardant
   (5-a) Silane-treated aluminum hydroxide; BF013STV, manufactured by Nippon Light Metal Co., Ltd.
   (5-b) Halogen-based (decabromodiphenyl ethane; DBDPE); Plasafety (registered trademark) AM-1000, manufactured by Manac Inc.
   (5-c) Antimony trioxide; ATOX-S, manufactured by Nihon Seiko Co., Ltd.
(6) Silane coupling agent
   (6-a) Alkyl-modified silane (octyltriethoxysilane); Dynasylan (registered trademark) OCTEO, manufactured by Evonik Industries
   (6-b) Vinyl-modified silane (vinyltriethoxysilane); SILQUEST A-151, manufactured by Momentive Performance Materials Inc.
(7) Plasticizer
   (7-a) Paraffinic process oil; Diana Process Oil PW-380, manufactured by Idemitsu Kosan Co., Ltd.
   (7-b) Adipic acid ether ester-based; ADK CIZER RS-107, manufactured by ADEKA Corporation
(8) Colorant
   Carbon black; Seast G-SVH, manufactured by Tokai Carbon Co., Ltd.
(9) Antioxidant
   2,2,4-trimethyl-1,2-dihydroquinoline polymer (TMQ), Nocrac 224-S, manufactured by Ouchi Shinko Chemical Industrial Co., Ltd.

For each example and comparative example, the formulation excluding the crosslinking agent was prepared using a kneader (closed mixer), and then the crosslinking agent was further added and kneaded using an open roll. The obtained pre-crosslinked composition was crosslinked by compression molding for 6 minutes at 180°C in a sheet-type mold coated with a release agent to prepare a test piece with a thickness of 2 mm. For the test pieces of each example and comparative example, the hardness was measured and the flame retardancy was evaluated as follows. In addition, the pre-crosslinked composition was sandwiched between two SUS plates uncoated with a release agent and crosslinked under the same conditions while being compression molded to a thickness of 2 mm.

### (Hardness)

The hardness was measured using a durometer (type A) on the test piece in accordance with JIS K6253. The hardness is shown in Table 1. The passing criterion was 80 or less.

### (Mold Releasability)

The test piece formed with the SUS plates was judged as passing "o" if it did not break when peeled off from the SUS plates after crosslinking, and judged as failing "×" if it broke. The results are shown in Table 1.

### (Flame Retardancy)

For the test piece, it was determined whether it met V-0 in the combustion test of the UL94 standard. Those that met V-0 were judged as passing "∘", and those that did not meet it were judged as failing "×". The results are shown in Table 1.

**[Table 1]**

| | | | | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|---|---|---|---|
| | Rubber | EPDM | | 100 | 100 | 100 | 100 | | 100 | 100 | 100 | 100 | 100 | 100 | 100 | 100 |
| | | EBDM | | | | | | 100 | | | | | | | | |
| | Crosslinking Agent | Dicumyl Peroxide | | 4.8 | 4.8 | 4.8 | 4.8 | 4.8 | 4.8 | 4.8 | 4.8 | 4.8 | 4.8 | 4.8 | 4.8 | 4.8 |
| | Crosslinking Aid | Zinc Oxide | | 5 | 5 | 5 | 5 | 5 | 5 | 5 | 5 | 5 | 5 | 5 | 5 | 5 |
| | Processing Aid | Stearic Acid | (a) | 2 | 2 | 2 | 2 | 2 | 2 | 5 | 2 | 2 | 2 | 2 | 2 | 2 |
| | | Oleic Acid Amide | (b) | 2.5 | 2.5 | 2.5 | 2.5 | 2.5 | 2.5 | 5 | 2.5 | 2.5 | 2.5 | 2.5 | 2.5 | 2.5 |
| | | Fluorine-containing Compound | (c) | 2 | 2 | 2 | 2 | 2 | 2 | 5 | 2 | 2 | 2 | 2 | 2 | 2 |
| | | Ethylene-α-olefin Copolymer | | 4.5 | 4.5 | 4.5 | 4.5 | 4.5 | 4.5 | 4.5 | 4.5 | 4.5 | 4.5 | 4.5 | 4.5 | 4.5 |
| | Flame Retardant | Aluminum Hydroxide | | 250 | 250 | 250 | 250 | 250 | 250 | 250 | 220 | 250 | 250 | 250 | 250 | 30 |
| Composition (Parts by Mass) | | Halogen-based | | | | | | | | | | | | | | 32 |
| | | Antimony Trioxide | | | | | | | | | | | | | | 27 |
| | Silane Coupling Agent | Alkyl-modified Silane | | 12.5 | 15 | 12.5 | 20 | 12.5 | 0 | 0 | 12.5 | 12.5 | 10 | 0 | 12.5 | 0 |
| | | Vinyl-modified Silane | | | | | | | | | | | | 12.5 | | |
| | Plasticizer | Paraffinic Process Oil | | 20 | 10 | 10 | 0 | 20 | 26.2 | 26.2 | 15 | 25 | 15 | 15 | 0 | 0 |
| | | Adipic Acid Ether Ester-based | | | | | | | | | | | | | 15 | |
| | Colorant | Carbon Black | | 6 | 6 | 6 | 6 | 6 | 6 | 6 | 6 | 6 | 6 | 6 | 6 | 6 |
| | Antioxidant | TMQ | | 1.5 | 1.5 | 1.5 | 1.5 | 1.5 | 1.5 | 1.5 | 1.5 | 1.5 | 1.5 | 1.5 | 1.5 | 1.5 |
| Total Content of Processing Aids (a)-(c) | | | (wt%) | 1.6 | 1.6 | 1.6 | 1.6 | 1.6 | 1.6 | 3.6 | 1.7 | 1.6 | 1.6 | 1.6 | 1.6 | 3.0 |
| Aluminum Hydroxide Content | | | (wt%) | 60.9 | 62.0 | 62.4 | 62.8 | 60.9 | 61.8 | 60.5 | 58.5 | 60.1 | 62.0 | 61.6 | 61.6 | 13.8 |
| Silane Coupling Agent / Aluminum Hydroxide | | | (wt%) | 5.0 | 6.0 | 5.0 | 8.0 | 5.0 | 0 | 0 | 5.7 | 5.0 | 4.0 | 5.0 | 5.0 | 0 |
| Silane Coupling Agent + Plasticizer Content | | | (wt%) | 7.9 | 6.2 | 5.6 | 5.0 | 7.9 | 6.5 | 6.3 | 7.3 | 9.0 | 6.2 | 6.8 | 6.8 | 0 |
| Evaluation | Hardness Hs | | | 72 | 74 | 78 | 77 | 72 | 75 | 76 | 71 | 70 | 75 | 85 | 75 | 67 |
| | Mold Releasability | | | ○ | ○ | ○ | ○ | ○ | × | × | ○ | ○ | × | × | ○ | ○ |
| | Flame Retardancy | | | ○ | ○ | ○ | ○ | ○ | ○ | × | × | × | ○ | ○ | ○ | ○ |
| Remarks | | | | | | | | | | | | | | | Plasticizer Bleeding | Hazardous Substance |

As shown in Table 1, the flame-retardant rubber compositions of Examples 1 to 5, which have formulations within the range of the present invention, exhibited appropriate hardness, good releasability, and high flame retardancy. That is, it was possible to achieve properties equivalent to those of Comparative Example 8, which used halogen-based and antimony-based flame retardants. In particular, Examples 1, 2, and 5, in which the plasticizer paraffinic process oil was contained at a preferred content in total with the silane coupling agent, had a reduced hardness of 75 or less. On the other hand, Comparative Examples 1 and 2, which did not add a silane coupling agent, and Comparative Example 5, which had an insufficient amount of silane coupling agent, all failed to obtain releasability. Furthermore, Comparative Example 2 had an excessive amount of processing aids such as fatty acid amide, so that the flame retardancy was reduced. Comparative Example 3 had an insufficient amount of flame retardant, so that the flame retardancy was insufficient. Comparative Example 4 had an excessive amount of paraffinic process oil, so the flame retardancy was reduced. Comparative Example 6 used a vinyl-modified silane coupling agent, which increased the hardness of the EPDM, and the unreacted silane coupling agent bonded the EPDM to the mold, reducing the releasability. Comparative Example 7 used an ether ester-based plasticizer with poor compatibility with EPDM, resulting in bleeding.

## Claims

1. A flame-retardant rubber composition comprising:
an ethylene-α-olefin-non-conjugated diene copolymer;
aluminum hydroxide; and
an alkyl-modified silane coupling agent,
wherein an amount of the aluminum hydroxide is 60 mass % or more of the flame-retardant rubber composition,
wherein an amount of the alkyl-modified silane coupling agent is 8 mass % or less of the flame-retardant rubber composition, and
wherein an amount of the alkyl-modified silane coupling agent is 5 mass % or more of the aluminum hydroxide.

2. The flame-retardant rubber composition according to claim 1, further comprising: a hydrocarbon-based plasticizer, and
wherein a total amount of the hydrocarbon-based plasticizer and the alkyl-modified silane coupling agent is 8 mass % or less of the flame-retardant rubber composition.

3. The flame-retardant rubber composition according to claim 2, further comprising: a processing aid containing at least stearic acid and a fatty acid amide-based compound, or further containing a fluorine-containing compound, and
wherein a total amount of the fluorine-containing compound and the at least stearic acid and a fatty acid amide-based compound is 3 mass % or less of the flame-retardant rubber composition.

4. The flame-retardant rubber composition according to any one of claims 1 to 3, wherein a total amount of an alkyl-modified silane coupling agent and a hydrocarbon-based plasticizer is 6 mass % or more of the flame-retardant rubber composition.

5. The flame-retardant rubber composition according to claim 4, wherein the flame-retardant rubber composition has a JIS-A hardness of 75 or less and achieves flame retardancy of V-0 according to UL94 standard.

6. A gasket for an electric vehicle, a hybrid vehicle, or a lithium-ion battery, the gasket comprising: the flame-retardant rubber composition according to claim 5.
